# EUROPEAN PATENT APPLICATION

(11) **EP 4 848 015 A1**
(43) Date of publication of application: **02.12.2026**
(21) Application number: 26168657.0
(22) Date of filing: 27.03.2026
(51) Int. Cl.: G05B 19/05, F16P 3/08, G05B 9/02

(54) **SAFETY SYSTEM FOR PLC-CONTROLLED APPARATUS**

(30) Priority: 30.05.2025 IT 202500012640
(71) Applicant: Kalos S.r.l., 00128 Rome (IT)
(72) Inventor: MARCHI, Chiara, 00128 Rome (IT)
(74) Representative: Lunati & Mazzoni S.r.L.

(57) **Abstract**

A safety system for PLC-controlled apparatus is provided adapted to be implemented in a cabin; wherein the cabin comprises walls, an access door, a PLC-controlled apparatus; and wherein the system comprises a sensor adapted to be fixedly connected to the door or to the wall in such a way as to be able to detect relative movements between door and wall so as to generate at least one activation signal whenever the door is opened from a closed position; and a control unit (1) comprising a first electrical connector (2) adapted to be electrically connected to a power supply network external to the system, a second electrical connector (3) adapted to be electrically connected to the PLC-controlled apparatus, a network connector (4) adapted to be connected in data passage with the PLC-controlled apparatus, a differential magnetothermal switch (5) electrically interposed between the connectors (2, 3); a contactor (6) electrically interposed between the connectors (2, 3) downstream of the switch (5) and operatively connected to the network connector (4), and a receiver (7) operatively connected with the sensor, electrically interposed between the switch (5) and the contactor (6) and configured to receive at least the activation signal, and to interrupt, by means of the contactor (6), the electrical connection between the connectors (2, 3) and the data passage in the network connector (4).

## Description

The present invention has as its object a safety system for PLC-controlled apparatus of the type specified in the preamble of the first claim.

In particular, the present invention has as its object a safety system which operates on an apparatus adapted to control the movements of handling means, for example employed in automated warehouses such as stacker cranes or conveyor belts.

As is known, in automated warehouses various handling systems are employed for the transport and management of goods. Among these, stacker cranes and conveyor belts represent widely used solutions to ensure the automation of the logistic flow. The operation of such systems is generally controlled by PLCs, which manage the handling according to predefined parameters, position sensors and communication protocols with the warehouse management system (Warehouse Management System, WMS).

Stacker cranes are apparatus designed to handle load units between different storage levels by means of vertical and horizontal structures. They operate on guides and use electronically controlled motors to ensure precise positioning and reduced response times. Similarly, conveyor belts are employed for the continuous movement of goods along predetermined paths, using variable speed motors and automated deviation systems.

In order to ensure the safety of the operations, such systems are provided with protection and control devices, which comprise: photoelectric barriers and proximity sensors, used to detect obstacles and prevent collisions; emergency stop systems, activated manually or automatically in the event of anomalies or dangerous conditions; speed controls and safety braking, which regulate the dynamics of movements according to the presence of operators or other environmental variables; certified safety PLCs, which perform continuous monitoring functions and activate emergency procedures in the event of detected malfunctions.

Safety systems based on PLCs manage the communication between the various components, ensuring that the operations take place within predefined safety limits. Furthermore, in modern automated warehouses, the safety devices are often integrated into industrial networks based on redundant and encrypted communication protocols, in order to prevent errors and tampering.

The prior art described comprises some important drawbacks.

In particular, one of the main problems is represented by the complexity in the management of safety systems, which require advanced configurations and periodic controls to ensure full compliance with safety standards.

Furthermore, the interaction between the handling means and human operators can generate critical situations, since the response times of automatic systems may not always be sufficient to prevent accidents, especially in highly dynamic environments.

A further drawback is linked to interoperability between components of different suppliers, since safety protocols and software architectures vary depending on the manufacturer, making the integration of new devices or the updating of existing systems complex.

Finally, the detection and protection systems based on sensors may be subject to malfunctions due to adverse environmental conditions, such as dust, vibrations or electromagnetic interferences, compromising the reliability of safety operations.

A non-limiting example of such drawbacks is identifiable in laser therapy devices (that is a device which pertains to various types of treatments, both at medical and aesthetic level) where the unauthorized approach to the device may be particularly dangerous.

In this situation, the technical task underlying the present invention is to devise a safety system for PLC-controlled apparatus capable of substantially overcoming at least part of the mentioned drawbacks.

Within said technical task, an important aim of the invention is to achieve a safety system for PLC-controlled apparatus which is structurally and functionally simple, in particular easily manageable and controllable without the need to carry out complex maintenance cycles.

Another important aim of the invention is to make a safety system for PLC-controlled apparatus which is highly reactive, eliminating the possibility that accidents may occur.

Furthermore, a further aim of the invention is to make a safety system for PLC-controlled apparatus which is adaptable to any existing apparatus and does not require particular configurations to make it operative, in particular eliminating the need for adaptation to local management software.

In conclusion, an important aim of the invention is to reduce the sensitivity of the system to external adverse situations.

The technical task and the specified aims are achieved by a safety system for PLC-controlled apparatus as claimed in the annexed claim 1.

Preferred technical solutions are highlighted in the dependent claims.

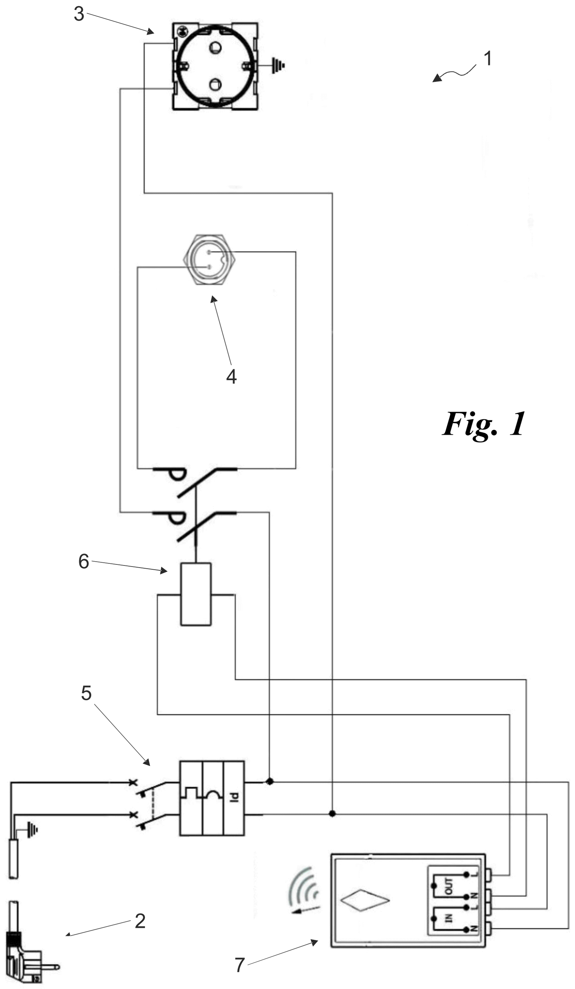

The features and the advantages of the invention are clarified below by the detailed description of preferred embodiments of the invention, with reference to Fig. 1 which shows an exemplary diagram of a safety system for PLC-controlled apparatus according to the invention.

In the present document, the measures, values, shapes and geometric references (such as perpendicularity and parallelism), when associated with words such as "about" or other similar terms such as "approximately" or "substantially", are to be understood as within measurement errors or inaccuracies due to production and/or manufacturing errors and, above all, within a slight deviation from the value, the measure, the shape or the geometric reference to which they are associated. For example, such terms, if associated with a value, preferably indicate a deviation not greater than 10% of the value itself.

Furthermore, when used, terms such as "first", "second", "upper", "lower", "main" and "secondary" do not necessarily identify an order, a priority of relationship or relative position, but may simply be used to more clearly distinguish different components from one another.

Unless otherwise specified, as results from the following discussions, it is understood that terms such as "processing", "computing", "determining", "calculating", or the like, refer to the action and/or processes of a computer or similar electronic computing device that manipulates and/or transforms data represented as physical quantities, such as electronic quantities of registers of a computer system and/or memories into other data similarly represented as physical quantities within computer systems, registers or other devices for storing, transmitting or displaying information.

The measurements and data reported in the present text are to be considered, unless otherwise indicated, as carried out in International Standard Atmosphere ICAO (ISO 2533:1975).

The safety system for PLC-controlled apparatus is adapted to be implemented in a cabin. The cabin is substantially a closed space, for example made by a room or placed inside a room.

The safety system may also comprise the cabin itself.

The cabin therefore comprises walls delimiting the cabin, that is the closed space. As already stated, the cabin may be made in the form of a room, a technical cabinet or a similar structure adapted to contain a PLC-controlled apparatus. Preferably, the cabin is a room, that is one of the internal environments of a building such as one for residential use or preferably commercial use. The room may thus be identified in a section of the space of a building (for example in stone or bricks) surrounded by walls (also made of plasterboard), provided with an access door to said section/environment and preferably with a floor and a ceiling.

The cabin therefore comprises said access door. Said door is movable with respect to one of the walls of the cabin.

The cabin therefore comprises a PLC-controlled apparatus. The latter is placed inside the cabin.

In a non-limiting embodiment, the PLC-controlled apparatus may be identified in a laser therapy device configured to use the laser for treatments at medical and/or aesthetic level.

The system preferably comprises a sensor fixedly connected to the door or to a wall of the cabin.

Therefore, the sensor is configured to detect relative movements between the door and the wall of the cabin. Furthermore, the sensor is configured to generate at least one activation signal whenever the door is opened from a closed position.

The system therefore also comprises a control unit.

With reference to the Figures, the control unit employed in the system according to the invention is globally denoted by the number **1.**

The control unit 1 is an integral part of the system.

It preferably comprises a first connector **2.**

The first connector 2 is of the electrical type. Therefore, it is adapted to be electrically connected to a power supply network external to the system.

The control unit 1 also includes a second connector 3. Similarly to the first connector 2, the second connector 3 is electrical. Therefore, it is adapted to be electrically connected with the PLC-controlled apparatus. Optionally, the PLC-controlled apparatus may comprise the first connector 2.

In a preferred embodiment of the invention, the second connector **3** includes a shuko socket, providing a standardized connection for the PLC-controlled apparatus. Similarly, the first connector 2 may include a shuko plug, allowing the connection of the control unit to the external power supply network through a widespread connection interface.

The control unit 1 preferably also comprises a network connector **4.**

The network connector 4 is adapted to be connected in data passage with the PLC-controlled apparatus.

It allows a standardized data connection with the PLC-controlled apparatus. For example, the network connector 4 may be a suitably bipolar GX16 socket. Therefore, the control unit 1 preferably also comprises a switch **5.**

The switch 5 is preferably of the differential magnetothermal type, also known with the widespread term "residual current circuit breaker". The switch 5 is therefore electrically interposed between the connectors 2, 3.

Furthermore, the control unit 1 comprises a contactor **6.**

The contactor 6 is preferably electrically interposed between the connectors 2, 3 downstream of the switch 5. Furthermore, the contactor 6 is operatively connected to the network connector 4. Therefore, the contactor 6 is configured to control the electrical connection between the connectors 2, 3 and the data transmission through the network connector 4.

The control unit 1 comprises at least one further component.

In particular, the control unit comprises a receiver **7.**

The receiver 7 is operatively connected to the sensor. Furthermore, the receiver 7 is electrically interposed between the switch 5 and the contactor 6.

Therefore, advantageously, the receiver 7 is configured to receive at least the activation signal from the sensor and to interrupt, by means of the contactor 6, the electrical connection between the connectors 2, 3 and the data passage through the network connector 4.

Therefore, the control unit 1 is capable of completely blocking the operation of the apparatus with the sole activation signal of the sensor.

In a preferred embodiment, the control unit 1 is configured to be positioned inside the cabin. Therefore, preferably, the control unit 1 comprises a housing including the second electrical connector 3, the network connector 4, the switch 5 and the contactor 6.

In a variant, the sensor and the receiver 7 are configured to communicate with one another wirelessly, eliminating the need for physical cabling between these components.

In an embodiment of the system which comprises the cabin, the latter is an integral part of the safety system, ensuring structural and functional protection to the PLC-controlled apparatus.

The operation of the safety system for PLC-controlled apparatus previously described in structural terms is the following.

Substantially, the system can be implemented with simplicity on any apparatus managed by PLC placed in a cabin or even only in a room. In fact, it is sufficient to disconnect the apparatus from the normal power supply network and from the PLC data cable and interpose, for the connection of power supply and network data, the control unit between the apparatus and the power supply network and the PLC. Therefore, once the sensor has been positioned, the system is capable, through the control unit 1, of managing the blocking of the system without having to reprogram the PLC or without having to intervene specifically on hardware and software parts of the apparatus already implemented.

Therefore, the safety system for PLC-controlled apparatus according to the invention achieves important advantages.

In fact, the described safety system allows to automatically interrupt the electrical power supply of the PLC-controlled apparatus and the data transmission in the event of opening of the cabin door, ensuring a high level of operational safety. Thanks to the configuration of the sensor and the receiver, the system offers an immediate response to the variation of the state of the door, reducing the risk of accidental exposure to live electrical components.

In summary, the system is structurally and functionally simple, easily manageable and controllable without the need to carry out complex maintenance cycles. Furthermore, it is highly reactive, so as to eliminate the possibility that accidents may occur thanks to the immediate interruption of the power supply and of the data transmission upon opening of the door.

In addition, the system is adaptable to any existing apparatus, not requiring particular configurations to make it operative and eliminating the need for adaptation to local management software.

In conclusion, the system reduces the sensitivity to external adverse situations, ensuring reliable operation in different environmental conditions, since the sensor is hardly affected by such events, the system not requiring a particular sensitivity. The invention is susceptible of variants falling within the scope of the inventive concept defined by the claims.

Within this scope, all details are replaceable by equivalent elements and the materials, the shapes and the sizes may be any.

## Claims

1. Safety system for PLC-controlled equipment designed to be installed in a cabin;
- said cabin comprising:
- walls delimiting said cabin,
- an access door to said cabin located at one of said walls and movable with respect to said wall,
- PLC-controlled equipment;
and said system comprising:
- a sensor suitable for being fixedly connected to said door or said wall in such a way as to be able to detect relative movements between said door and said wall and then to generate at least one activation signal whenever said door is opened from a closed position; and
- a control unit (1) comprising:
- a first electrical connector (2) suitable for being electrically connected to a power supply network external to said system,
- a second electrical connector (3) designed to be electrically connected to said PLC-controlled device,
- a network connector (4) designed to be connected in data passage with said PLC-controlled device,
- a differential magnetothermal switch (5) electrically interposed between said connectors (2, 3);
- a contactor (6) electrically interposed between said connectors (2, 3) downstream of said switch (5) and operatively connected to said network connector (4), and
**characterized in that** said control unit (1) further comprises:
- a receiver (7) operatively connected to said sensor, electrically interposed between said switch (5) and said contactor (6) and configured
- to receive at least said activation signal, and
- to interrupt, via said contactor (6), the electrical connection between said connectors (2, 3) and the data passage in said network connector (4).

2. System according to claim 1, wherein said control unit (1)
- is suitable for being positioned in said cabin and
- comprises a housing including said second electrical connector (3), said network connector (4), said switch (5) and said contactor (6).

3. System according to any of the preceding claims, wherein said sensor and said receiver communicate wirelessly.

4. System according to any of the preceding claims, wherein said network connector (4) is a bipolar GX16 socket..

5. System according to any of the preceding claims, wherein said second connector (3) includes a shuko socket.

6. System according to any of the preceding claims, wherein said first connector (2) includes a shuko plug.

7. System according to any of the preceding claims, comprising said cabinet.

8. System according to the preceding claim, wherein said cabinet comprises said PLC-controlled apparatus comprising said first connector (2).

9. System according to any of claims 7-8, wherein said cabin comprises said PLC-controlled apparatus; and wherein said PLC-controlled apparatus is a laser therapy device.
